# EUROPÄISCHE PATENTSCHRIFT

(11) **EP 1 110 348 B1**
(45) Veröffentlichungstag und Bekanntmachung des Hinweises auf die Patenterteilung: **08.10.2003**
(21) Anmeldenummer: 99936323.7
(22) Anmeldetag: 27.05.1999
(51) Int. Cl.: H04L 12/22, B60R 16/02, H04L 29/06

(54) **FAHRZEUGRECHNERANORDNUNG**
VEHICLE COMPUTER SYSTEM
ORDINATEUR DE VEHICULE

(30) Priorität: 04.09.1998 DE 19840484
(43) Veröffentlichungstag der Anmeldung: 27.06.2001
(73) Patentinhaber: ROBERT BOSCH GMBH, 70442 Stuttgart (DE)
(72) Erfinder: SCHMEDDING, Rainer, D-31199 Diekholzen (DE); WESTENDORF, Andreas, D-31137 Hildesheim (DE); BAIERL, Wolfgang, D-73630 Remshalden (DE)
(86) Internationale Anmeldenummer: DE9901551
(87) Internationale Veröffentlichungsnummer: WO00014926

(56) Entgegenhaltungen:
- EP-A- 0 517 534
- WO-A-97/19833

## Beschreibung

### Stand der Technik

Die Erfindung geht von einer Fahrzeugrechneranordnung, insbesondere für ein Kraftfahrzeug, eine Bahn, ein Flugzeug oder Schiff, mit mindestens zwei Rechnern, und mindestens einem Datenbus, über den die mindestens zwei Rechner miteinander verbunden sind, nach der Gattung des Hauptanspruchs aus.

Moderne Fahrzeuge, insbesondere Kraftfahrzeuge, sind in der Regel mit einer Mehrzahl von unabhängig voneinander funktionierenden elektronischen Systemen, beispielsweise einer Audiosignalanlage und einem Sicherungssystem ausgestattet. Die Audiosignalanlage umfaßt in der Regel einen AM/FM-Rundfunkempfänger, ein Compact-Cassetten-(CC) oder ein Compact-Disc-(CD) Abspielgerät, einen Klangsteller, beispielsweise in Form eines Equalizers, einen Verstärker und Lautsprecher. Der Rundfunkempfänger und das CC- oder CD-Abspielgerät und oftmals auch der Equalizer sind gemeinsam in einem zum Einbau in das Armaturenbrett eines Kraftfahrzeugs vorgesehenen gemeinsamen Gehäuse untergebracht, wobei das Gehäuse hinsichtlich seiner Größe genormt ist, so daß sichergestellt ist, daß die Audioanlage zumindest in einer Mehrzahl von Kraftfahrzeug-Armaturenbrettern installiert werden kann.

Das erwähnte Sicherungssystem funktioniert in der Regel völlig unabhängig von der Audioanlage. Das Sicherungssystem besteht üblicherweise aus einer Mehrzahl von über das Kraftfahrzeug verteilten Sensoren und einem zentralen anwendungsspezifischen integrierten Schaltkreis (ASIC) zur Aufzeichnung der Sensorsignale und gegebenenfalls zur Auslösung von sicherheitsrelevanten Funktionen. Das Sicherungssystem steuert außerdem beispielsweise Stellglieder zum Öffnen bzw. Verschließen der Türen oder Fenster und beispielsweise eine Alarmanlage.

Neueste Kraftfahrzeuge verfügen außerdem auch über ein Diagnosesystem, das die Funktion des Kraftfahrzeugmotors, der Leistungsübertragung, der Kraftstoffanlage und gegebenenfalls weiterer Komponenten überwacht. Das Diagnosesystem kann dabei mit einem externen Rechner verbunden werden, so daß die aufgezeichneten Diagnoseinformationen beispielsweise zur Reparatur eines Fahrzeuges aus dem Rechner des Diagnosesystems ausgelesen und ausgewertet werden können. Weiterhin umfaßt das Diagnosesystem auch in das Armaturenbrett integrierte Anzeigevorrichtungen, die den Kraftfahrzeugführer über den Betriebszustand des Fahrzeugs informieren.

Ebenso verfügen verschiedene moderne Kraftfahrzeuge über Navigationssysteme, die aus von dem Fahrzeug angeordneten Sensoren, beispielsweise einem Kompaß, einem Wegstreckenzähler, und außerdem den Ausgangssignalen eines GPS-(Global Positioning System) Empfängers die aktuelle Fahrzeugposition bestimmen und durch Vergleich der aktuellen Fahrzeugposition mit einer elektronisch gespeicherten Landkarte unter Zuhilfenahme einer vom Kraftfahrzeugführer vorgegebenen Start- und Zielposition, Zielführungsinformationen zur Führung des Kraftfahrzeugführers erzeugt.

Außerdem werden Kraftfahrzeuge oftmals auch mit Kommunikationssystemen, beispielsweise in Form von Mobilfunktelefonen, ausgerüstet. Besonders weit entwickelte Systeme sind dabei sprachgesteuert und erlauben es somit dem Kraftfahrzeugführer während der Fahrt Telefonanrufe einzuleiten oder entgegenzunehmen, ohne daß dabei der Kraftfahrzeugführer eine Hand vom Lenkrad nehmen muß oder anderweitig vom Verkehrsgeschehen abgelenkt wird.

Jedes der beschriebenen Systeme verfügt dabei über einen eigenen speziellen Prozessor oder ASIC zur Abarbeitung der speziellen für die Geräte benötigten Software. Möchte nun ein Kraftfahrzeughalter eines der beschriebenen Systeme bei seinem Kraftfahrzeug nachrüsten, ist dieser gezwungen, ein komplettes System, inklusive des dafür benötigten speziellen Prozessors zu erwerben und in das Fahrzeug zu installieren.

Aus der WO 97/19833 ist ein Computersystem für ein Fahrzeug, insbesondere ein Kraftfahrzeug, bekannt, in das die oben beschriebenen, verschiedenen voneinander unabhängigen Komponenten integriert sind, und das über eine offene Hardware-Architektur und ein gemeinsames Betriebssystem für die verschiedenen Komponenten verfügt, so daß die Nachrüstung einer der oben genannten oder weiterer Komponenten durch Anschluß an die bestehende Rechneranordnung ermöglicht wird.

Aus der DE 35 43 996 C2 ist eine Mehrrechneranordnung für ein Fahrzeug, insbesondere ein Kraftfahrzeug, bekannt, bei der die verschiedenen Rechner zum Zweck des Informationsaustausches miteinander verbunden sind. Um eine nachträgliche Anpassung der in den Rechnern abzuarbeitenden Programmabläufe beispielsweise durch den Benutzer zu ermöglichen, sind in den verschiedenen Rechnern zugeordneten Schreib-Lesespeichern entsprechend gekennzeichnete unterschiedliche, fest abgespeicherte Datensätze abgelegt. Über einen frei programmierbaren Speicher kann zu Beginn des Rechnerbetriebs durch Eingabe entsprechender Kennungen auf die abgespeicherten Datensätze zugegriffen, und somit die Programmabläufe für die Rechner angepasst werden.

EP-A-0 517 534 offenbart eine Mehrrechneranordnung in Form eines LAN-PC-Netzes, welches zur Auffrischung von über größere Entfernungen übertragenen Informationen in die Verbindungsleitungen eingeschaltete Repeater aufweist. Die Repeater erfüllen eine Torfunktion dergestalt, dass eine Weiterleitung von Informationen, die an gespeicherte nicht zugelassene Adressen gesendet werden, verhindert wird.

### Vorteile der Erfindung

Die erfindungsgemäße Fahrzeugrechneranordnung mit den Merkmalen des Hauptanspruchs hat den Vorteil, dass bei Erhöhung der Flexibilität bei der Ausrüstung bzw. Nachrüstung eines mit der Fahrzeugrechneranordnung ausgerüsteten Fahrzeugs mit unterschiedlichen weiteren Applikationen gleichzeitig die Forderungen nach System,-Stabilität und - Sicherheit erfüllt wird. Dazu verfügt die Fahrzeugrechneranordnung über eine Überprüfungsschaltung, die sicherstellt, dass ein Zugriff auf sicherheitskritische Betriebsprogrammbestandteile oder Bestandteile der Rechneranordnung nur für einen autorisierten Personenkreis, beispielsweise den Kraftfahrzeughersteller, ermöglicht wird. Damit lassen sich die Sicherheitsanforderungen der Kraftfahrzeughersteller, die angesichts drohender Gewährleistungsansprüche ein Interesse an der Unversehrtheit der von ihnen vorgegebenen Betriebsprogramme interessiert sind, erfüllen. Ein unkontrollierter Zugriff auf sensible Bereiche der Fahrzeugrechneranordnung oder der Betriebsprogramme wird somit wirkungsvoll ausgeschlossen.

Im Sinne einer Kostenreduktion ist es von besonderem Vorteil, wenn zumindest einer der Rechner der Fahrzeugrechneranordnung ein Standard-Personal-Computer ist und zur Kommunikation zwischen dem bzw. den Rechnern und weiteren an die Rechner angeschlossenen Komponenten ein Standardbetriebssystem verwendet wird. Dem liegt die Überlegung zugrunde, daß Standard-Personal-Computer in sehr viel größeren Stückzahlen hergestellt werden, als beispielsweise auf bestimmte Anwendungen, wie die eines Fahrzeugnavigationssystems oder einer Motorsteuerung, zugeschnittene Spezialrechner. Da aufgrund der im Vergleich zu Spezialrechnern sehr viel größeren Produktionszahlen für Standard-Personal-Computer bei diesen die Produktionskosten sehr viel weniger ins Gewicht fallen, ergibt sich für auf Standard-Personal-Computer aufbauende Fahrzeugrechneranordnungen ein erheblich geringerer Herstellungsaufwand. Ebenso verhält es sich auch mit den für die Kommunikation der Rechner untereinander oder mit den angeschlossenen weiteren Komponenten verwendeten Betriebssystemen, wobei der Rückgriff auf Standard-Betriebssysteme eine zeit- und damit kostenaufwendige Neuentwicklung von Spezialbetriebssystemen verzichtbar macht.

Außerdem hat die Verwendung von Standard-Betriebssystemen für die Rechner der Fahrzeugrechneranordnung den Vorteil, daß für an die Fahrzeugrechneranordnung nachträglich anschließbare weitere Komponenten ein weit verbreiteter und allgemein akzeptierter Standard für den Datenaustausch zur Verfügung steht. Die Anpassung anschließbarer weiterer Komponenten an verschiedenartige Betriebssysteme entfällt damit ebenso wie die damit verbundenen Zusatzkosten.

### Zeichnungen

Ein Ausführungsbeispiel der vorliegenden Erfindung ist in der Figur dargestellt und wird im folgenden näher erläutert.

Die Figur zeigt eine erfindungsgemäße Fahrzeugrechneranordnung mit untereinander über Datenbusse verbundenen Rechnern, wobei an die Datenbusse weitere Komponenten angeschlossen sind.

### Beschreibung der Ausführungsbeispiele

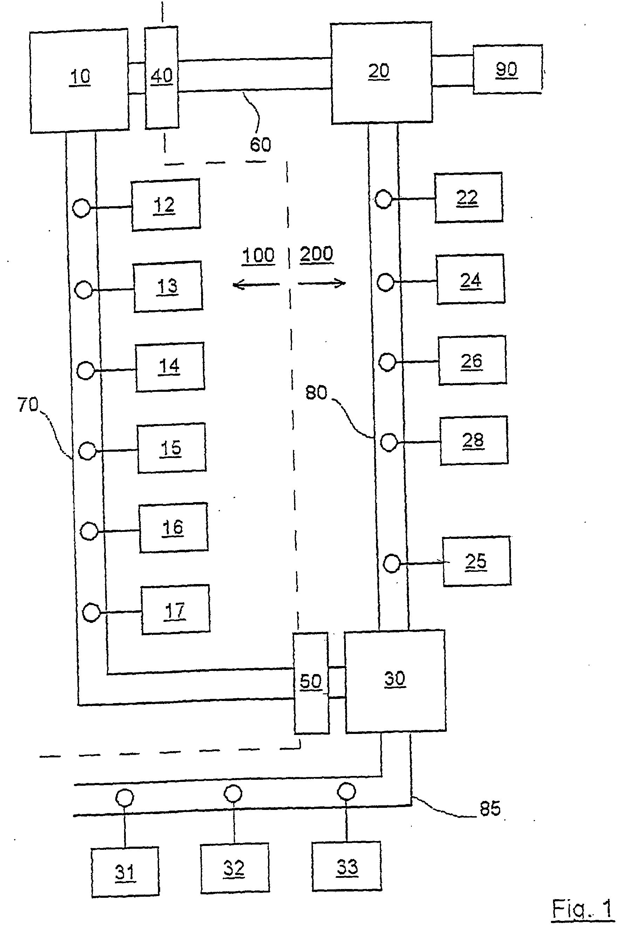

In Figur 1 ist beispielhaft die bzw. ein Ausschnitt aus einer erfindungsgemäßen Fahrzeugrechneranordnung dargestellt.

Die erfindungsgemäße Fahrzeugrechneranordnung gemäß dem vorliegenden Ausführungsbeispiel umfaßt drei Rechner 10, 20, 30, die zur Verarbeitung unterschiedlicher Arten von Informationen, nämlich ein erster Rechner 10 zur Verarbeitung von fahrzeugspezifischen Informationen, ein zweiter Rechner 20 zur Verarbeitung von Informationen von Multimedia-Anwendungen und ein dritter Rechner 30 zur Verarbeitung von Informationen der sogenannten Bodyelektronik, also beispielsweise der Zentralverriegelung, der Schiebedachsteuerung, einer elektrischen Sitz- und Spiegelverstellung, vorgesehen sind.

Die drei Rechner 10, 20 ,30 des vorliegenden Ausführungsbeispiels sind über Daten- und/oder Steuerbusse 60, 70, 80 miteinander verbunden, wobei ein erster Bus 60 den ersten und den zweiten Rechner 10, 20, ein zweiter Bus 70 den ersten und den dritten Rechner 10, 30, ein dritter Bus 80 den zweiten und den dritten Rechner 20, 30 miteinander verbinden. An den dritten Rechner ist außerdem ein vierter Bus 85 angeschlossen.

Die beschriebenen Busse dienen nicht nur der Verbindung der mindestens zwei Rechner miteinander; vielmehr sind an die Busse 60, 70, 80, 85 weitere Komponenten, wie beispielsweise eine Motorsteuerung 12 an den zweiten Bus 70, eine Rundfunkempfänger-Komponente 22 an den dritten Bus 80 und beispielsweise eine elektrische Sitz- und Spiegelverstellung 33 an den vierten Bus 85, angeschlossen.

Außerdem verfügt die in der Figur dargestellte Fahrzeugrechneranorndung über eine Schnittstelle 90 zur Kommunikation der Fahrzeugrechneranordnung mit externen Komponenten, wie beispielsweise einem in einer Kraftfahrzeug-Werkstatt an die Fahrzeugrechneranordnung angeschlossenen Diagnosegerät.

Schließlich verfügt die dargestellte Fahrzeugrechneranordnung im vorliegenden Fall über eine erste und eine zweite Überprüfungsschaltung 40 und 50, wobei die erste Überprüfungsschaltung 40 zwischen dem ersten Rechner 10 und dem zweiten Rechner 20 und die zweite Überprüfungsschaltung 50 zwischen dem ersten Rechner 10 und dem dritten Rechner 30 angeordnet ist. Die erste Überprüfungsschaltung 40 hat dabei die Aufgabe, zu überprüfen, ob für in dem ersten oder dem zweiten Rechner verarbeitete bzw. zu verarbeitende Daten ein Datenaustausch zwischen dem ersten und dem zweiten Rechner zugelassen ist, und den Datenaustausch für den Fall zu sperren, daß dieser für die überprüften Daten nicht zugelassen ist. Analog kommt der zweiten Überprüfungsschaltung 50, die zwischen dem ersten und dem dritten Rechner angeordnet ist, die Aufgabe zu, den Datenaustausch zwischen erstem und drittem Rechner 10, 30 zu überprüfen und gegebenenfalls zu unterbinden.

Bei den weiteren Komponenten 12 bis 17 einer ersten Gruppe von an den ersten Bus 70 angeschlossenen weiteren Komponenten handelt es sich im einzelnen um
- eine Motorsteuerung 12, die in bekannter Weise beispielsweise in Abhängigkeit der Motortemperatur, der Motordrehzahl, des Lastzustandes des Motors und der vom Motor für die Kraftstoffverbrennung benötigten, mittels eines Luftmassenmessers bestimmten Luftmenge, und gegebenenfalls eines Ausgangssignals einer die Abgaszusammensetzung bestimmenden λ-Sonde die anhand eines im ersten Rechner 10 abgespeicherten Kennlinienfeldes berechnete ideale Kraftstoffmenge dem Motor zumißt, und die beispielsweise in bekannter Weise in Abhängigkeit des Lastzustandes des Motors, und der Ausgangssignale eines Klopfsensors unter Zuhilfenahme von weiteren im Rechner 10 abgelegten Kennlinienfeldern den für den Verbrennungsvorgang, im Falle eines Otto-Motors, idealen Zündzeitpunkt einstellt,
- eine Getriebesteuerung 13, die in Abhängigkeit der Lastund Drehzahldaten des Kraftfahrzeugmotors bei einem Automatikgetriebe die idealen Schaltpunkte festlegt, die im Sinne einer Antischlupfregelung (ASR) bei einzelnen durchrutschenden Antriebsrädern eine teilweise oder vollständige Sperrung des Differentials bewirkt, und die sich beispielsweise im Sinne einer intelligenten Getriebesteuerung den Fahrgewohnheiten des Kraftfahrzeugführers dahingehend anpaßt, daß die Schaltpunkte, beispielsweise bei vorwiegend sportlicher Fahrweise des Kraftfahrzeugführers zu höheren Motordrehzahlen hin verschoben werden, während bei einer eher konservativen Fahrweise des Kraftfahrzeugführers die Schaltpunkte zu niedrigeren Drehzahlen hin verschoben werden,
- der Motorsteuerung 12 und der Getriebesteuerung 13 zugeordnete Sensoren 14, wie beispielsweise ein Wasserund/oder Öltemperatur-Sensor, ein Lastsensor zur Ermittlung des Lastzustandes des Kraftfahrzeugmotors, ein Klopfsensor zur Feststellung, ob eventuell eine klopfende Verbrennung vorliegt, ein Luftmassenmesser zur Bestimmung der für die im Motor stattfindende Verbrennung benötigten Luftmenge, eine λ-Sonde zur Bestimmung der Abgaszusammensetzung u. s. w.,
- eine Steuerung 15 für ein Anti-Blockier-System (ABS), die beim Abbremsen des Kraftfahrzeugs das Blockieren der gebremsten Räder verhindert,
- eine Gurtstrammer- oder Airbag-Steuerung 16, die im Falle eines Unfalls die Wirksamkeit des Sicherheitsgurtes erhöht und zudem zum Schutz des Fahrers einen Airbag zündet, und
- eine weitere Gruppe von Sensoren 17, die beispielsweise Radsensoren zur Feststellung des Stillstandes eines Rades des Kraftfahrzeugs bei einem Bremsvorgang, Aufprallsensoren zur Zündung des Airbags im Falle eines Unfalls u. s. w. umfaßt.

Der erste Rechner 10, an den die beschriebenen weiteren Komponenten 12 bis 17 über den Bus 70 angeschlossen sind, dient neben der Bereitstellung von Kennlinienfeldern für beispielsweise die Kraftstoffmengenzumessung und die Zündzeitpunktverstellung und gegebenenfalls zur Ermittlung der optimalen Werte für die Kraftstoffbemessung und Zündzeitpunktverstellung auch der Abwicklung der Kommunikation der weiteren Komponenten untereinander. So regelt der erste Rechner 10 unter anderem auch die Übertragung der zur Bestimmung des Zündzeitpunktes und der Gemischaufbereitung erforderlichen Daten von den Sensoren 14 zur Motorsteuerung 12, bzw. liest die Daten der Sensoren 14, berechnet daraus unter Zuhilfenahme der abgelegten Kennlinienfelder die optimalen Werte für Zündzeitpunkt und Gemischzumessung und stellt diese der Motorsteuerung 12 zur Verfügung. Ebenso steuert der erste Rechner 10 auch beispielsweise die Kommunikation des ABS-Steuergeräts mit den Radsensoren 17.

Bei den an den zweiten Rechner angeschlossenen Komponenten 22 bis 28 handelt es sich im einzelnen um
- eine Rundfunkempfänger-Komponente 22 zum Empfang von über Rundfunksendefrequenzen ausgestrahlten Rundfunkprogrammen und gegebenenfalls von über die Rundfunksendefrequenzen ausgestrahlten Zusatzinformationen,
- ein Compact-Disc-Abspielgerät 24 in Form eines sogenannten CD-Changers, mittels dessen aus einer Menge von mehreren in den CD-Changer eingelegten Compact-Discs eine Compact-Disc zur Wiedergabe ausgewählt wird, und der als Ausgangssignal wiedergebbare Audiosignale zur Verfügung stellt,
- ein Funkgerät 26 in Form eines GSM-Mobilfunktelefons und
- eine Navigationseinheit 28, die in Abhängigkeit eines vorgegebenen Start- und Zielortes, der Daten einer digital gespeicherten Landkarte, und von Informationen über die aktuelle Position des Kraftfahrzeugs, die beispielsweise mit Hilfe eines GPS- (Global Positioning System) Empfängers, weiterhin der ABS-Radsensoren 17 und gegebenenfalls eines Kompasses die aktuelle Fahrzeugposition auf dem Kontext der digital gespeicherten Landkarte bestimmt und daraus Führungsinformationen zur Führung des Kraftfahrzeugführers bestimmt, und
- eine Anzeigeeinheit 25, die zum einen der Wiedergabe von kraftfahrzeugspezifischen Informationen, wie beispielsweise der gefahrenen Momentangeschwindigkeit, des Kilometerstandes, der Motordrehzahl, des Kraftstofftankinhalts, und ähnlicher Informationen, des weiteren beispielsweise der am Rundfunkempfänger 22 eingestellten aktuell empfangenen Rundfunksendefrequenz bzw. des empfangenen Rundfunkprogramms, der aktuell im CD-Changer 24 ausgewählten Compact-Disc bzw. des aktuell abgespielten Titels von einer bestimmten Compact-Disc, von Funktionen des GSM-Telefons und gegebenenfalls zur Anzeige von Führungsinformationen der Navigationseinheit 28 dient.

Der dritte Rechner 30 dient schließlich zur Verarbeitung von Informationen betreffend die sogenannte Bodyelektronik. Bei den an den vierten Bus 85 angeschlossenen weiteren Komponenten 31 bis 33 handelt es sich im einzelnen um
- eine Steuerung 31 für die Zentralverriegelung,
- eine Steuerung 32 für das elektrische Schiebedach des Fahrzeugs, die beispielsweise beim Abstellen des Motors automatisch ein geöffnetes Schiebedach schließt, und
- eine Außen- und Innenspiegelverstellung 33, sowie eine elektrische Sitzverstellung zur Anpassung verschiedener anpassungsbedürftiger Funktionen bzw. Elemente an die individuellen Bedürfnisse des jeweiligen Kraftfahrzeugführers, wobei beim vorliegenden Beispiel vorgesehen ist, daß mittels der Steuerung 33 eine automatische Anpassung der diversen Funktionen und Elemente an den jeweiligen Fahrer nach dessen Identifizierung durch die Kraftfahrzeugrechneranordnung erfolgt.

Bei einem ersten Ausführungsbeispiel der erfindungsgemäßen Fahrzeugrechneranordnung handelt es sich bei der beschriebenen Schnittstelle 90 um einen sogenannten Chipkartenleser, in den eine Informationen tragende Chipkarte, beispielsweise in Form der von Blaupunkt-Autoradios bekannten Key-Card eingelegt werden kann. Nach Einlegen der Chipkarte in den Chipkartenleser 90 liest der zweite Rechner 20, an den beim vorliegenden Ausführungsbeispiel der Chipkartenleser 90 angeschlossen ist, von der Chipkarte Informationen und führt diese, im Beispiel der vorgenannten Key-Card der Rundfunkempfänger-Komponente 22 zur Identifizierung des Benutzers und gegebenenfalls zur Freischaltung des Rundfunkempfängers zur Benutzung zu. Außerdem werden die auf der Chipkarte abgelegten Informationen zur Identifizierung des Benutzers an den dritten Rechner 30 weitergeleitet, aus dessen Speicher benutzerspezifische Informationen für die Sitz- und Spiegeleinstellung, die der identifizierte Benutzer beim Verlassen des Kraftfahrzeugs eingestellt hatte, ausgelesen und zur Einstellung des Sitzes und der Spiegel an die Sitzund Spiegelverstellung 33 weitergeleitet.

Ebenso ist es jedoch auch möglich, daß die benutzerspezifischen Informationen, wie die Sitz- und Spiegeleinstellung, ein bevorzugt gehörtes Rundfunkprogramm oder eine persönliche Telefonnummernliste für das GSM-Telefon nicht in dem zweiten und dritten Rechner bzw. den daran angeschlossenen Komponenten 22 bis 28 und 31 bis 33 abgespeichert werden, sondern daß diese beim Abstellen des Fahrzeugs in einen Speicher der in den Chipkartenleser 90 eingelegten Chipkarte eingeschrieben werden, und bei erneuter Inbetriebnahme der Fahrzeugrechneranordnung aus der Chipkarte ausgelesen werden.

Bei einem weiteren Ausführungsbeispiel dient die in den Chipkartenleser 90 eingelegte Chipkarte nicht nur der Identifizierung des Benutzers und gegebenenfalls der Speicherung benutzerspezifischer Daten, sondern darüber hinaus auch der Aktualisierung und/oder Ergänzung von Bestandteilen der Betriebsprogramme eines der Rechner 10, 20 ,30 und/oder anderen Teilen der Fahrzeugrechneranordnung oder von an einen der Rechner 10, 20, 30 angeschlossenen weiteren Komponenten 12, 13, 14, 15, 16, 17, 22, 24, 25, 26, 28, 31, 32, 33. Dazu ist es bei der erfindungsgemäßen Fahrzeugrechneranordnug vorgesehen, daß der zweite Rechner, gegebenenfalls nach Prüfung der Berechtigung der in den Chipkartenleser 90 eingesetzten Chipkarte Betriebsprogramm-Bestandteile von dieser ausliest und den betroffenen Teilen der Fahrzeugrechneranordnung oder weiteren Komponenten zur Aktualisierung und/oder Ergänzung deren Betriebsprogrammen zuführt.

Ebenso ist es vorgesehen, daß beispielsweise zum Zweck der Fehlerdiagnose in einer autorisierten Kraftfahrzeug-Werkstatt mittels der Schnittstelle 90 Informationen der Fahrzeugrechneranordnung aus derselben ausgelesen und weiter verarbeitet werden. Beim vorliegenden Ausführungsbeispiel ist es dabei vorgesehen, daß die aus der Fahrzeugrechneranordnung ausgelesenen Informationen über den Chipkarten-Leser, der hier gleichzeitig auch als Chipkarten-Schreibgerät ausgeführt ist, in einen Speicher der in den Chipkarten-Leser 90 eingelegten Chipkarte geschrieben werden.

Ebenso ist es beim vorliegenden Ausführungsbeispiel vorgesehen, daß beispielsweise die letzte Sitz- und Spiegeleinstellung, ebenso wie das zuletzt gehörte Hörfunkprogramm und ein persönliches Telefonbuch des Benutzers der Kraftfahrzeuganordnung bei bzw. kurz vor Verlassen des Fahrzeugs, beispielsweise durch das Ausschalten der Zündung des Kraftfahrzeugs initiiert, in den Speicher der in den Chipkarten-Leser 90 eingelegten Chipkarte geschrieben werden.

Bei einem weiteren Ausführungsbeispiel der erfindungsgemäßen Fahrzeugrechneranordnung ist die Schnittstelle 90 in Form eines Compact-Disc-Lesegerät ausgebildet, so daß durch Auswertung von auf einer in das Compact-Disc-Lesegerät 90 eingelegten Compact-Disc gespeicherten Daten das Betriebsprogramm der Fahrzeugrechneranordnung, von Teilen der Fahrzeugrechneranordnung oder von an einen der Rechner 10, 20, 30 angeschlossenen weiteren Komponenten 12 bis 33 ganz oder teilweise austausch- oder aktualisierbar ist. Die Vorgehensweise zur Aktualisierung der Betriebsprogramme durch auf einer in das Compact-Disc-Lesegerät eingelegten CD-ROM abgespeicherte Daten erfolgt dabei in gleicher Weise, wie dies beispielsweise bei heutigen Personal-Computern üblich ist.

Bei einem weiteren Ausführungsbeispiel der erfindungsgemäßen Fahrzeugrechneranordnung ist die Schnittstelle 90 in Form eines als weitere Komponente an einen der mindestens 2 Rechner angeschlossenen Funkgeräts 26, insbesondere eines GSM-Mobilfunktelefons 26, realisiert, wobei zur Änderung und/oder Aktualisierung von Teilen des Betriebsprogramms der Fahrzeugrechneranordnung, von Teilen der Fahrzeugrechneranordnung oder von an einem der mindestens zwei Rechner angeschlossenen weiteren Komponenten 12 bis 31 nach Herstellung einer Funkverbindung zwischen dem Funkgerät 26 und einem externen Datenanbieter von dem Datenanbieter gesendete Daten von dem Funkgerät 26 empfangen werden. Dabei ist es vorgesehen, daß die Datenübertragung erst nach Anforderung durch die Fahrzeugrechneranordnung vom Datenanbieter zum Funkgerät und damit zur Fahrzeugrechneranordnung erfolgt. Ebenso ist es jedoch auch möglich, daß eine Datenübertragung vom Datenanbieter zur Fahrzeugrechneranordnung durch den Datenanbieter, beispielsweise durch einen Kraftfahrzeughersteller, initiiert wird. Dies ist beispielsweise dann sinnvoll, wenn der Kraftfahrzeughersteller nach Auslieferung einer bestimmten Gruppe von Fahrzeugrechneranordnungen in deren Betriebsprogrammen Fehler oder doch zumindest verbesserungsbedürftige Betriebsprogrammbestandteile aufgefunden hat, die er durch diese Maßnahme verbessern und/oder aktualisieren kann. Ebenso ist es jedoch auch möglich, über die Funkverbindung Funkgerät 26-Datenanbieter Fahrzeuginformationen an den Datenanbieter, in diesem Fall beispielsweise eine Kraftfahrzeugwerkstatt, weiterzuleiten, so daß auf einfache Weise während des Betriebs des Kraftfahrzeugs eine Ferndiagnose des Kraftfahrzeugs, beispielsweise anhand der durch die Sensorgruppe 14 und 17 ermittelten Fahrzeugdaten ermöglicht wird. Es kann dann beispielsweise beim Auftreten von Fehlfunktionen seitens der Kraftfahrzeugwerkstatt automatisch eine Warnung über die Funkverbindung Datenanbieter-Funkgerät 26 an die Fahrzeugrechneranordnung und mithin den Kraftfahrzeugführer gesendet werden, die diesen über mögliche Fehlfunktionen des Kraftfahrzeugs bzw. der Kraftfahrzeugrechneranordnung oder einen bevorstehenden Werkstattaufenthalt informiert.

Bei einem weiteren Ausführungsbeispiel der vorliegenden Fahrzeugrechneranordnung ist es vorgesehen, daß die Schnittstelle 90 durch einen als weitere Komponente an einen der Rechner der Fahrzeugrechneranordnung angeschlossenen Punkempfänger 22, insbesondere einen Rundfunkempfänger, realisiert ist, wobei zur Änderung und/oder Aktualisierung von Teilen des Betriebsprogramms der Fahrzeugrechneranordnung, von Teilen der Fahrzeugrechneranordnung oder von an einen der Rechner angeschlossenen weiteren Komponenten 12 bis 31 Daten als Funksignale von dem Funkgerät empfangen werden. Bei den von dem Funkempfänger 22 empfangenen Informationen handelt es sich beispielsweise um innerhalb des sogenannten Traffic Message Channel (TMC) des Radio-Daten-Systems (RDS) über eine Rundfunksendefrequenz übertragene, digital codierte Verkehrsfunkinformationen, die beispielsweise von der Navigationseinheit 28 bei der Routenplanung und der entsprechenden Führung des Kraftfahrzeugführers berücksichtigt werden können.

Bei der vorliegenden Fahrzeugrechneranordnung ist es vorzugsweise vorgesehen, daß die Rechner 10, 20, 30 der erfindungsgemäßen Fahrzeugrechneranordnung hinsichtlich ihrer Architektur in Form von Standard-Personal-Computern ausgeführt sind, und daß weiterhin die Informationsverarbeitung in den Rechnern 10, 20, 30, ebenso wie der Datenaustausch der Rechner 10, 20, 30 untereinander und mit den an die Rechner angeschlossenen weiteren Komponenten 12 bis 31 über ein Standard-Betriebssystem erfolgt. Neben einer besonders guten Verfügbarkeit der Bestandteile, insbesondere der Rechner für die Fahrzeugrechneranordnung bewirkt dies, daß für die Betriebsprogramme der Fahrzeugrechneranordnung ein weitverbreiteter und allgemein hin akzeptierter Standard vorhanden ist, so daß bei der Produktion der weiteren Komponenten 12 bis 33 ebenso wie der Erstellung der notwendigen Betriebsprogramme für die Fahrzeugrechneranordnung und/oder die an dieser angeschlossenen weiteren Komponenten 12 bis 33 Kraftfahrzeughersteller ebenso wie Zulieferer auf ein einheitliches Betriebssystem zurückgreifen können.

Alternativ dazu kann es jedoch auch vorgesehen sein, daß verschiedene Rechner der Fahrzeugrechneranordnung über andere als eine Standard-Personal-Computer-Rechnerarchitektur verfügen. Bei den in der Figur dargestellten Bussystemen 60, 70, 80, 85 handelt es sich beim vorliegenden Ausführungsbeispiel, bei dem die Rechner 10, 20, 30 eine Standard-PC-Architektur aufweisen, um aus dem PC-Bereich bekannte Bussysteme vom Typ 1394, bei dem es sich um ein industrieübliches, breitbandiges, serielles Bussystem, das vorzugsweise in PC-Consumer-Geräten für Multimedia-Applikationen eingesetzt wird, handelt. Ein weiteres verwendetes Bussystem ist der USB (Universal Serial Bus), ein ebenfalls aus der PC-Industrie stammender Standard für ein serielles Bussystem mit gegenüber 1394 geringerer Bandbreite. Ebenso ist es jedoch auch möglich, daß zumindest ein Teil der Rechner 10 bis 30 über einen aus der Kraftfahrzeugindustrie bekannten CAN- oder einen verwandten Bus miteinander verbunden sind.

Beim vorliegenden Ausführungsbeispiel der erfindungsgemäßen Fahrzeugrechneranordnung ist es nun vorgesehen, daß zwischen dem ersten Rechner 10 und dem zweiten Rechner 20 eine erste Überprüfungsschaltung 40 angeordnet ist, die prüft, ob für in dem ersten oder dem zweiten Rechner verarbeitete bzw. zu verarbeitende Daten ein Datenaustausch zwischen dem ersten und dem zweiten Rechner zugelassen ist, und die den Datenaustausch für den Fall sperrt, daß dieser für die überprüften Daten nicht zugelassen ist. Eine entsprechende Überprüfungsschaltung 50 ist auch zwischen dem ersten Rechner 10, bzw. den an den ersten Rechner 10 angeschlossenen weiteren Komponenten 12-17 und dem dritten Rechner 30 für die Bodyelektronik angeordnet. Dem liegt die Überlegung zugrunde, daß die durch die verschiedenen Rechner verarbeiteten Informationen unterschiedlichen Sicherheitsanforderungen genügen müssen, so daß ein unkontrollierter Zugriff eines der Rechner 20 oder 30 auf die durch den ersten Rechner 10 verarbeiteten sicherheitskritischen Informationen wirkungsvoll verhindert wird.

So betreffen die in dem ersten Rechner 10 verarbeiteten Informationen sicherheitskritische Anforderungen, wie beispielsweise die Motorsteuerung 12 und die Getriebesteuerung 13, ebenso wie die ABS-/ASR-Steuerung oder einen Gurtstrammer- und Airbagsteuerung, also sämtlich solche Informationen bzw. Funktionen, deren Ausfall oder unkontrollierte Manipulation die Sicherheit des Kraftfahrzeugs bzw. des Kraftfahrzeugführers beeinträchtigende Folgen haben kann. Es bewirken daher die Überprüfungsschaltungen 40 und 50 der in Figur 1 dargestellten Fahrzeugrechneranordnung eine Abschirmung des sicherheitskritischen Bereichs (erster Rechner 10, weitere Komponenten 12 bis 17 und zweiter Bus 70) der erfindungsgemäßen Fahrzeugrechneranordnung gegenüber dem vor externen Zugriffen über die Schnittstelle 90 relativ offenen Bereich, umfassend den zweiten Rechner 20, den dritten Rechner 30, die weiteren Komponenten 22 bis 28 und 31 bis 33 sowie den dritten Bus 80 und den vierten Bus 85.

Andererseits ist es jedoch auch erforderlich, daß eine kontrollierte Kommunikation zwischen dem sicherheitsrelevanten Bereich 100 und dem relativ frei zugänglichen Bereich 200 möglich ist. So werden beispielsweise aus dem sicherheitskritischen Bereich 100 Informationen der Motor- oder Getriebesteuerung sowie der Sensorgruppen 14 und 17, ebenso beispielsweise wie Informationen der Gurtstrammer- und Airbagsteuerung 16 an den zweiten Rechner 20 über die erste Überprüfungsschaltung 40 übertragen. Ein Beispiel für solche Informationen sind beispielsweise die Sensorsignale der für die Gurtstrammer-/Airbagsteuerung 16 erforderlichen Informationen der Sensoren 17, die anzeigen, daß ein Aufprall des Kraftfahrzeugs auf ein Hindernis erfolgt ist bzw. in Kürze bevorsteht. Diese Informationen werden im Falle eines Unfalls des betroffenen Kraftfahrzeugs beim vorliegenden Ausführungsbeispiel über den ersten Rechner 10, die erste Überprüfungsschaltung 40 und den zweiten Rechner 20 an das Funkgerät 26 weitergeleitet, über das automatisch ein Notruf, beispielsweise bei der nächstgelegenen Polizeidienststelle eingeleitet wird. Ebenso werden beispielsweise auch Daten der Motorsteuerungs- und Getriebesteuerungs-Sensoren 14, wie beispielsweise der gerade eingelegte Gang, die aktuelle Kühlmittel- oder Öltemperatur des Motors, der momentane Kraftstoffverbrauch oder ähnliche Informationen der an den zweiten Rechner 20 über den dritten Bus 80 angeschlossenen Anzeigeeinheit 25 zur Anzeige zugeführt.

Für die beschriebenen Anwendungsfälle reicht es zunächst aus, daß die beschriebenen Überprüfungsschaltungen 40 und 50 einen Datenaustausch von dem zweiten bzw. dritten Rechner zum ersten Rechner vollständig blockieren und vom ersten zum zweiten bzw. dritten Rechner zumindest für einen Teil der Informationen ermöglichen. Dies bedeutet, daß bei einem ersten Ausführungsbeispiel der erfindungsgemäßen Fahrzeugrechneranordnung die Überprüfungsschaltungen 40, 50 unidirektional selektiv durchlässig sein können. Die Forderung nach einer selektiven Durchlässigkeit der Überprüfungsschaltungen ergibt sich beispielsweise daraus, daß das Auslesen von beispielsweise motorspezifischen Kennlinienfeldern, wie eines Einspritzmengen- oder eines Zündzeitpunkt-Kennlinienfeldes durch einen unberechtigten Benutzer nicht möglich sein soll.

Um nun aber beispielsweise die Überarbeitung, einen Austausch oder eine Ergänzung der in dem ersten Rechner 10 verarbeiteten sicherheitskritischen Betriebsprogramme durch beispielsweise den Kraftfahrzeughersteller zu ermöglichen, ist es bei einem weiteren Ausführungsbeispiel vorgesehen, daß die Überprüfungsschaltungen 40 und 50 durch beispielsweise den Kraftfahrzeughersteller oder eine andere berechtigte Person oder Servicestelle abschaltbar sind, so daß auch eine Informationsübertragung von der Schnittstelle 90 über den zweiten Rechner 20 den ersten Bus 60 zum ersten Rechner 10 und ebenso über den dritten Rechner 30 und den zweiten Bus 70 zum ersten Rechner 10 erfolgen kann. Die Abschaltung der Überprüfungseinrichtungen 40 und 50 kann dabei, wie im vorliegenden Fall durch eine separate, an die Überprüfungsschaltungen angeschlossene Steuerleitung realisiert werden, ebenso, wie beispielsweise durch eine softwaremäßige Lösung, also beispielsweise durch einen Codewortschutz. Im letzteren Fall würden beispielsweise die Überprüfungsschaltungen nur für solche Daten durchlässig sein, denen ein bestimmter. Header mit einem vorgegebenen Codewort vorangestellt ist.

Wie bereits angedeutet, ist beim vorliegenden Ausführungsbeispiel ein erster geschützter Bereich 100 der Fahrzeugrechneranordnung zur Verarbeitung von sicherheitskritischen bzw. fahrzeugspezifischen Daten, vorzugsweise zur Steuerung von Funktionen und/oder Aggregaten des Kraftfahrzeugs und/oder zur Erfassung von fahrzeugspezifischen Informationen vorgesehen. Darüber hinaus ist ein weiterer Bereich, umfassend den zweiten Rechner 20, den dritten Bus 80 und den an diesen angeschlossenen weiteren Komponenten 22 bis 28 vorzugsweise zur Verarbeitung von Informationen multimedialer Anwendungen, insbesondere von Daten eines Rundfunkempfängers 22, weiterer Audiosignalquellen 24, eines Mobilfunktelefons 26 und eines Navigationsgeräts 28 vorgesehen. Schließlich ist ein dritter Rechner, der ebenfalls dem ungeschützten Bereich 200 zugeordnet ist, zur Verarbeitung von Informationen der Bodyelektronik, nämlich von in Form von weiteren Komponenten an den vierten Bus 85 angeschlossenen Steuergeräten für die Zentralverriegelung 31, das Schiebedach 32 und die Sitz- und Spiegelverstellung 33 vorgesehen.

Damit wird eine Auftrennung des Betriebsprogramms für die Fahrzeugrechneranordnung dahingehend erreicht, daß ein erster Teil der Betriebsprogramme, nämlich die für den ersten geschützten Bereich 100 vorgesehenen Betriebsprogramme nur für einen berechtigten Personenkreis, insbesondere den Kraftfahrzeughersteller, im Sinne einer Aktualisierung oder eines Auslesens der Betriebsprogramme zugänglich ist, während ein zweiter nicht oder nur partiell geschützter Bereich 200 auch für Zuliefer- oder Servicefirmen oder auch den Kraftfahrzeughalter zugänglich ist.

Eine bevorzugte Auftrennung der Betriebsprogramme erfolgt dabei nach dem Kriterium sicherheitskritisch bzw. kraftfahrzeug-proprietär und nicht bzw. bedingt sicherheitskritisch, nicht kraftfahrzeug-proprietär, Multimedia- und FIS- (Fahrer-Informations-System) anwendungen. Ein Beispiel für letztgenannte Anwendungen wären beispielsweise ein Terminplaner, Computerspiele, eine Textverarbeitung oder unter Umständen auch ein Internet-Zugang.

Während beim vorliegenden Ausführungsbeispiel eine Auftrennung der Betriebsprogramme bzw. der Fahrzeugrechneränordnung in einen ersten sicherheitskritischen und einen zweiten nicht bzw. bedingt sicherheitskritischen Bereich vorgeschlagen wird, ist es jedoch auch möglich, eine Auftrennung der Fahrzeugrechneranordnung bzw. der Betriebsprogramme nach anderen Kriterien, beispielsweise echtzeit- und nicht echtzeitkritischen Anwendungen vorzunehmen.

Obwohl in Figur 1 die erste und die zweite Überprüfungsschaltung 40 und 50 als separate Schaltungen dargestellt sind, sind diese beim vorliegenden Ausführungsbeispiel vorzugsweise in den ersten Rechner 10 bzw. den dritten Rechner 30 integriert, und in diesen in Form von Software ausgeführt.

## Patentansprüche

1. Fahrzeugrechneranordnung, insbesondere für ein Kraftfahrzeug, eine Bahn, ein Flugzeug oder Schiff, mit
- mindestens zwei Rechnern, und
- mindestens einem Datenbus, über den die mindestens zwei Rechner miteinander verbunden sind
**dadurch gekennzeichnet, daß** mindestens eine Überprüfungsschaltung (40) zwischen einem ersten (10) und einem zweiten (20) der mindestens zwei Rechner (10, 20) angeordnet ist, die prüft, ob für in dem ersten (10) oder dem zweiten Rechner (20) verarbeitete bzw. zu verarbeitende Daten ein Datenaustausch zwischen dem ersten (10) und dem zweiten Rechner (20) zugelassen ist, und die den Datenaustausch für den Fall sperrt, daß dieser für die überprüften Daten nicht zugelassen ist.

2. Fahrzeugrechneranordnung nach Anspruch 1, **dadurch gekennzeichnet, daß** mehr als zwei Rechner (10, 20, 30) über Datenbusse (60, 70, 80) derart miteinander verbunden, daß jeder der mehr als zwei Rechner (10, 20, 30) mit mindestens einem anderen der mehr als zwei Rechner (20, 30, 10) verbunden ist, und **daß** zumindest in einer Untermenge der Verbindungen zwischen den mehr als zwei Rechnern (10, 20, 30) Überprüfungsschaltungen (40, 50) zur Prüfung und gegebenenfalls Unterbindung des Datenaustauschs zwischen den miteinander verbundenen Rechnern (10, 20, 30) angeordnet sind.

3. Fahrzeugrechneranordnung nach einem der vorhergehenden Ansprüche, **dadurch gekennzeichnet, daß** die mindestens eine Überprüfungsschaltung (40) in einen der mindestens zwei miteinander verbundenen Rechner (10, 20) integriert ist.

4. Fahrzeugrechneranordnung nach einem der vorhergehenden Ansprüche, **dadurch gekennzeichnet, daß** die Überprüfungsschaltung (40) abschaltbar ist, so daß nach Abschaltung der Überprüfungsschaltung (40) ein Datenaustausch zwischen dem ersten (10) und dem zweiten (20) der mindestens zwei Rechner (10, 20) auch für solche Daten möglich ist, die für den Austausch zwischen erstem Rechner (10) und zweitem Rechner (20) gesperrt sind.

5. Fahrzeugrechneranordnung nach einem der vorhergehenden Ansprüche, **dadurch gekennzeichnet, daß** mindestens eine Schnittstelle (90) zur Kommunikation der Fahrzeugrechneranordnung mit externen Komponenten vorgesehen ist, und **daß** die oder eine weitere Überprüfungsschaltung (40) zwischen der mindestens einen Schnittstelle (90) und mindestens einem der mindenstens zwei Rechner (10, 20) angeordnet ist.

6. Fahrzeugrechneranordnung nach einem der vorhergehenden Ansprüche, **dadurch gekennzeichnet, daß** mindestens ein erster der mindestens zwei Rechner (10, 20) zur Verarbeitung von fahrzeugspezifischen Daten, vorzugsweise zur Steuerung von Funktionen und/oder Aggregaten des Fahrzeugs und/oder zur Erfassung von fahrzeugspezifischen Informationen, vorgesehen ist.

7. Fahrzeugrechneranordnung nach einem der vorhergehenden Ansprüche, **dadurch gekennzeichnet, daß** mindestens ein erster der mindestens zwei Rechner (10, 20) zur Verarbeitung von fahrzeugspezifischen Daten vorgesehen ist, und **daß** an den mindestens ersten Rechner (10) weitere Komponenten (12, 13, 15, 16), vorzugsweise Steuergeräte zur Steuerung von Funktionen und/oder Aggregaten des Fahrzeugs, Fühler (14, 17) zur Erfassung fahrzeugspezifischer Informationen und/oder Anzeigeinstrumente (25) zur Darstellung von Betriebsdaten des Fahrzeugs, angeschlossen sind.

8. Fahrzeugrechneranordnung nach einem der vorhergehenden Ansprüche, **dadurch gekennzeichnet, daß** mindestens ein zweiter Rechner (20) der mindestens zwei Rechner (10, 20) zur Verarbeitung von Daten multimedialer Anwendungen, insbesondere von Daten eines Rundfunkempfängers (22), weiterer Audiosignalquellen (24), eines Mobilfunktelefons (26), und eines Navigationsgeräts (28), vorgesehen ist.

9. Fahrzeugrechneranordnung nach einem der Ansprüche 5 bis 8,
**dadurch gekennzeichnet, daß** die Schnittstelle (90) in Form eines Compact-Disc-Lesegeräts ausgebildet ist, und **daß** durch Auswertung von auf einer in das Compact-Disc-Lesegerät (90) eingelegten Compact-Disc gespeicherten Daten das Betriebsprogramm der Fahrzeugrechneranordnung, von Teilen der Fahrzeugrechneranordnung oder von an einen der Rechner (10, 20) angeschlossenen weiteren Komponenten (12, 13, 14, 15, 16, 17, 22, 24, 25, 26, 28, 31, 32, 33) ganz oder teilweise austausch- oder aktualisierbar ist.

10. Fahrzeugrechneranordnung nach einem der Ansprüche 5 bis 9,
**dadurch gekennzeichnet, daß** die Schnittstelle (90) durch ein als weitere Komponente an einen der mindestens zwei Rechner (10, 20) angeschlossenes Funkgerät (26), inbesondere ein GSM-Mobilfunktelefon, realisiert ist, und daß zur Änderung und/oder Aktualisierung von Teilen des Betriebsprogramms der Fahrzeugrechneranordnung, von Teilen der Fahrzeugrechneranordnung oder von an einen der mindestens zwei Rechner (10, 20) angeschlossenen weiteren Komponenten (12, 13, 14, 15, 16, 17, 22, 24, 25, 26, 28, 31, 32, 33) nach Herstellung einer Funkverbindung zwischen dem Funkgerät (26) und einem Datenanbieter von dem Datenanbieter gesendete Daten von dem Funkgerät (26) empfangbar sind.

11. Fahrzeugrechneranordnung nach einem der Ansprüche 5 bis 10,
**dadurch gekennzeichnet, daß** die Schnittstelle (90) durch einen als weitere Komponente an einen der mindestens zwei Rechner (10, 20) angeschlossenen Funkempfänger (22), insbesondere einen Rundfunkempfänger, realisiert ist, und **daß** zur Änderung und/oder Aktualisierung von Teilen des Betriebsprogramms der Fahrzeugrechneranordnung, von Teilen der Fahrzeugrechneranordnung oder von an einen der Rechner (10, 20) angeschlossenen weiteren Komponenten (12, 13, 14, 15, 16, 17, 22, 24, 25, 26, 28, 31, 32, 33) Daten als Funksignale von dem Funkempfänger empfangbar sind.

12. Fahrzeugrechneranordnung nach einem der Ansprüche 5 bis 11,
**dadurch gekennzeichnet, daß** die Schnittstelle (90) durch einen Chipkartenleser realisiert ist, und **daß** zur Änderung und/oder Aktualisierung von Teilen des Betriebsprogramms der Fahrzeugechneranordnung, von Teilen der Fahrzeugrechneranordnung oder von an einen der Rechner (10, 20) angeschlossenen weiteren Komponenten (12, 13, 14, 15, 16, 17, 22, 24, 25, 26, 28, 31, 32, 33) Daten von einer in den Chipkartenleser eingelegten Chipkarte auswertbar sind.

## Claims

1. Vehicle computer arrangement, in particular for a motor vehicle, a train, an aircraft or ship, having
- at least two computers, and
- having at least one data bus via which the at least two computers are connected to one another, **characterized in that** at least one checking circuit (40) is arranged between a first computer (10) and a second computer (20) of the at least two computers (10, 20), which checking circuit (40) checks whether an exchange of data between the first computer (10) and the second computer (20) is permitted for data which is processed or is to be processed in the first computer (10) or the second computer (20), and which blocks the exchange of data if the exchange of data is not permitted for the checked data.

2. Vehicle computer arrangement according to Claim 1, **characterized in that** more than two computers (10, 20, 30) are connected to one another via data buses (60, 70, 80) in such a way that each of the more than two computers (10, 20, 30) is connected to at least one other of the more than two computers (20, 30, 10), and **in that** checking circuits (40, 50) for checking and if appropriate prohibiting the exchange of data between the computers (10, 20, 30) which are connected to one another are arranged at least in a subset of the connections between the more than two computers (10, 20, 30).

3. Vehicle computer arrangement according to one of the preceding claims, **characterized in that** the at least one checking circuit (40) is integrated into one of the at least two computers (10, 20) which are connected to one another.

4. Vehicle computer arrangement according to one of the preceding claims, **characterized in that** the checking circuit (40) can be switched off so that, after the checking circuit (40) has been switched off, an exchange of data is possible between the first computer (10) and the second computer (20) of the at least two computers (10, 20), even for data which is blocked for the exchange between the first computer (10) and the second computer (20).

5. Vehicle computer arrangement according to one of the preceding claims, **characterized in that** at least one interface (90) for the communication of the vehicle computer arrangement with external components is provided, and **in that** the one checking circuit (40) or a further checking circuit (40) is arranged between the at least one interface (90) and at least one of the at least two computers (10, 20).

6. Vehicle computer arrangement according to one of the preceding claims, **characterized in that** at least a first of the at least two computers (10, 20) is provided for processing vehicle-specific data, preferably for controlling functions and/or assemblies of the vehicle and/or for sensing vehicle-specific information.

7. Vehicle computer arrangement according to one of the preceding claims, **characterized in that** at least a first of the at least two computers (10, 20) is provided for processing vehicle-specific data, and **in that** further components (12, 13, 15, 16), preferably controllers for controlling functions and/or assemblies of the vehicle, sensors (14, 17) for sensing vehicle-specific information and/or display instruments (25) for displaying operating data of the vehicle, are connected to the at least first computer (10).

8. Vehicle computer arrangement according to one of the preceding claims, **characterized in that** at least a second computer (20) of the at least two computers (10, 20) is provided for processing data of multimedia applications, in particular data of a radio receiver (22), of further audio signal sources (24), of a mobile telephone (26) and of a navigation device (28).

9. Vehicle computer arrangement according to one of Claims 5 to 8, **characterized in that** the interface (90) is embodied in the form of a compact disc reader, and **in that**, by evaluating data which is stored in a compact disc inserted into the compact disc reader (90), the operating program of the vehicle computer arrangement can be entirely or partially exchanged or updated by parts of the vehicle computer arrangement or by further components (12, 13, 14, 15, 16, 17, 22, 24, 25, 26, 28, 31, 32, 33) which are connected to one of the computers (10, 20).

10. Vehicle computer arrangement according to one of Claims 5 to 9, **characterized in that** the interface (90) is implemented by means of a radio device (26), in particular a GSM mobile telephone, which is connected as a further component to one of the at least two computers (10, 20), and **in that**, in order to change and/or update parts of the operating program of the vehicle computer arrangement, data which is transmitted by the data provider after a radio link is established between the radio device (26) and a data provider can be received by the radio device (26) from parts of the vehicle computer arrangement or from further components (12, 13, 14, 15, 16, 17, 22, 24, 25, 26, 28, 31, 32, 33) which are connected to one of the at least two computers (10, 20).

11. Vehicle computer arrangement according to one of Claims 5 to 10, **characterized in that** the interface (90) is implemented by means of a radio receiver (22), in particular a broadcasting receiver, which is connected as a further component to one of the at least two computers (10, 20), and **in that**, in order to change and/or update parts of the operating program of the vehicle computer arrangement, data can be received, as radio signals, by the radio receiver from parts of the vehicle computer arrangement or from further components (12, 13, 14, 15, 16, 17, 22, 24, 25, 26, 28, 31, 32, 33) which are connected to one of the computers (10, 20).

12. Vehicle computer arrangement according to one of Claims 5 to 11, **characterized in that** the interface (90) is implemented by means of a chip card reader, and **in that**, in order to change and/or update parts of the operating program of the vehicle computer arrangement, data from a chip card which is inserted into the chip card reader can be evaluated by parts of the vehicle computer arrangement or by further components (12, 13, 14, 15, 16, 17, 22, 24, 25, 26, 28, 31, 32, 33) which are connected to one of the computers (10, 20).

## Revendications

1. Ordinateur de véhicule, notamment pour un véhicule automobile, un train, un avion ou un bateau, comprenant
- au moins deux ordinateurs, et
- au moins un bus de données reliant l'un à l'autre les au moins deux ordinateurs,
**caractérisé en ce qu'**
au moins un circuit de vérification (40) est disposé entre un premier (10) et un deuxième (20) d'au moins deux ordinateurs (10, 20), vérifie si pour des données traitées ou à traiter dans le premier (10) ou le deuxième ordinateur (20) un échange de données entre le premier (10) et le deuxième ordinateur (20) est autorisé, et bloque l'échange de données au cas où celui-ci n'est pas autorisé pour les données vérifiées.

2. Ordinateur de véhicule selon la revendication 1,
**caractérisé en ce que**
plus de deux ordinateurs (10, 20, 30) sont reliés les uns aux autres par des bus de données (60, 70, 80) de manière à ce que chacun des deux ordinateurs (10, 20, 30) ou plus soit relié à au moins l'un des deux ordinateurs (20, 30, 10)ou plus, et au moins dans un sous-ensemble des liaisons entre les deux ordinateurs (10, 20, 30) ou plus des circuits de vérification (40, 50) pour vérifier et le cas échéant verrouiller l'échange de données sont disposés entre les ordinateurs (10, 20, 30) reliés les uns aux autres.

3. Ordinateur de véhicule selon l'une quelconque des revendications précédentes,
**caractérisé en ce qu'**
au moins un circuit de vérification (40) est intégré dans au moins l'un des deux ordinateurs (10, 20) reliés l'un à l'autre.

4. Ordinateur de véhicule selon l'une quelconque des revendications précédentes,
**caractérisé en ce que**
le circuit de vérification (40) peut être coupé, permettant ainsi, après la coupure du circuit de vérification (40), un échange de données entre le premier (10) et le deuxième (20) d'au moins deux ordinateurs (10, 20), et même pour des données qui sont bloquées pour l'échange entre le premier (10) et le deuxième ordinateurs (20).

5. Ordinateur de véhicule selon l'une quelconque des revendications précédentes,
**caractérisé en ce qu'**
au moins une interface (90) pour la communication de l'ordinateur de véhicule avec des composants extérieurs est prévue, et le circuit de vérification (40) ou un circuit de vérification supplémentaire est prévu entre au moins l'interface (90) et au moins l'un des deux ordinateurs (10, 20).

6. Ordinateur de véhicule selon l'une quelconque des revendications précédentes,
**caractérisé en ce qu'**
au moins un premier des deux ordinateurs (10, 20) est prévu pour le traitement de données spécifiques au véhicule, de préférence pour commander des fonctions et/ou des unités du véhicule et/ou pour saisir des informations spécifiques au véhicule.

7. Ordinateur de véhicule selon l'une quelconque des revendications précédentes,
**caractérisé en ce qu'**
au moins un premier d'au moins deux ordinateurs (10, 20) est prévu pour le traitement de données spécifiques au véhicule, et au moins au premier ordinateur (10) d'autres composants (12, 13, 15, 16) sont raccordés, de préférence des appareils de commande pour commander des fonctions et/ou des unités du véhicule, des capteurs (14, 17) pour saisir des informations spécifiques au véhicule et/ou des instruments d'affichage (25) pour représenter des données de fonctionnement du véhicule.

8. Ordinateur de véhicule selon l'une quelconque des revendications précédentes,
**caractérisé en ce qu'**
au moins un deuxième ordinateur (20) d'au moins deux ordinateurs (10, 20) est prévu pour le traitement de données d'applications multimédias, notamment de données d'un récepteur radio (22), d'autres sources de signaux audio (24), d'un téléphone mobile (26) et d'un appareil de navigation (28).

9. Ordinateur de véhicule selon l'une quelconque des revendications 5 à 8,
**caractérisé en ce que**
l'interface (90) se présente sous la forme d'un lecteur de disques compacts, et par interprétation de données enregistrées sur un disque compact inséré dans le lecteur de disques compacts (90) on peut échanger ou actualiser entièrement ou partiellement le programme d'exploitation de l'ordinateur de véhicule, des parties de l'ordinateur de véhicule ou un autre composant (12, 13, 14, 15, 16, 17, 22, 24, 25, 26, 28, 31, 32, 33) raccordé à l'un des ordinateurs (10, 20).

10. Ordinateur de véhicule selon l'une quelconque des revendications 5 à 9,
**caractérisé en ce que**
l'interface (90) est réalisée par un appareil radio (26), notamment un téléphone mobile GSM, raccordé comme composant supplémentaire à au moins l'un des deux ordinateurs (10, 20), et pour modifier et/ou actualiser des parties du programme d'exploitation de l'ordinateur de véhicule, des parties de l'ordinateur de véhicule ou un autre composant (12, 13, 14, 15, 16, 17, 22, 24, 25, 26, 28, 31, 32, 33) raccordé à au moins l'un des deux ordinateurs (10, 20), des données envoyées par le fournisseur de données peuvent être reçues par l'appareil radio (26) après l'établissement d'une liaison radio entre l'appareil radio (26) et un fournisseur de données.

11. Ordinateur de véhicule selon l'une quelconque des revendications 5 à 10,
**caractérisé en ce que**
l'interface (90) est réalisée par un récepteur radio (22), notamment un récepteur de radiocommunication, raccordé comme composant supplémentaire à au moins l'un des deux ordinateurs (10, 20), et pour modifier et/ou actualiser des parties du programme d'exploitation de l'ordinateur de véhicule, des parties de l'ordinateur de véhicule ou un autre composant (12, 13, 14, 15, 16, 17, 22, 24, 25, 26, 28, 31, 32, 33) raccordé à au moins l'un des deux ordinateurs (10, 20), des données peuvent être reçues par le récepteur radio sous la forme de signaux radio.

12. Ordinateur de véhicule selon l'une quelconque des revendications 5 à 11,
**caractérisé en ce que**
l'interface (90) est réalisée par un lecteur de cartes à puce, et pour modifier et/ou actualiser des parties du programme d'exploitation de l'ordinateur de véhicule, des parties de l'ordinateur de véhicule ou un autre composant (12, 13, 14, 15, 16, 17, 22, 24, 25, 26, 28, 31, 32, 33) raccordé à au moins l'un des deux ordinateurs (10, 20), des données d'une carte à puce insérée dans le lecteur de cartes à puce peuvent être interprétées.
